# EUROPÄISCHE PATENTANMELDUNG

(11) **EP 4 292 745 A1**
(43) Veröffentlichungstag der Anmeldung: **20.12.2023**
(21) Anmeldenummer: 22179638.6
(22) Anmeldetag: 17.06.2022
(51) Int. Cl.: B23K 9/32, B23K 37/00

(54) **PROZESSKAMMER FÜR AUTOMATISIERTE LICHTINTENSIVE PROZESSE**

(71) Anmelder: Optrel Holding AG, 9630 Wattwil (CH)
(72) Erfinder: Esposito, Martin, 8640 Rapperswil (CH)
(74) Vertreter: Daub, Thomas

(57) **Zusammenfassung**

Die Erfindung geht aus von einer Prozesskammer für automatisierte lichtintensive Prozesse, insbesondere für einen automatisierten Schweißprozess, mit zumindest einer Kammerwand (20), die ein Sichtfenster (30) aufweist, das dazu vorgesehen ist, zumindest einen Teil des sichtbaren Lichts in zumindest einem Betriebszustand entsprechend einer vorgegebenen Abblendstärke abzublenden.

Es wird vorgeschlagen, dass das Sichtfenster (30) eine Abblendeinheit (40) aufweist, die dazu vorgesehen ist, die Abblendstärke des Sichtfensters (30) in Abhängigkeit von zumindest einem Steuersignal zu verändern.

## Beschreibung

### Stand der Technik

Die Erfindung betrifft eine Prozesskammer für automatisierte lichtintensive Prozesse.

Aus dem Stand der Technik sind derartige Prozesskammern bekannt, die ein stark getöntes Sichtfenster aufweisen, um während der Durchführung des lichtintensiven Prozesses gefahrlos in die Prozesskammer hineinblicken zu können. Diese Sichtfenster sind so stark getönt, dass ein Einblick in die Prozesskammer in Abwesenheit des lichtintensiven Prozesses nicht oder kaum möglich ist.

Die Aufgabe der Erfindung besteht insbesondere darin, eine gattungsgemäße Vorrichtung mit verbesserten Eigenschaften hinsichtlich einer Benutzerfreundlichkeit und/oder Flexibilität bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Prozesskammer für automatisierte lichtintensive Prozesse, insbesondere für einen automatisierten Schweißprozess, mit zumindest einer Kammerwand, die ein Sichtfenster aufweist, das dazu vorgesehen ist, zumindest einen Teil des sichtbaren Lichts in zumindest einem Betriebszustand entsprechend einer vorgegebenen Abblendstärke abzublenden.

Es wird vorgeschlagen, dass das Sichtfenster eine Abblendeinheit aufweist, die dazu vorgesehen ist, die Abblendstärke des Sichtfensters in Abhängigkeit von zumindest einem Steuersignal zu verändern. Hierdurch kann insbesondere ein Einblick in die Prozesskammer ermöglicht werden, auch wenn der lichtintensive Prozess gerade nicht stattfindet. Insbesondere kann eine Energieersparnis erreicht werden, da auf eine starke Innenbeleuchtung der Prozesskammer bei Abwesenheit des lichtintensiven Prozesses verzichtet werden kann, um einen Einblick zu ermöglichen. Insbesondere können in der Prozesskammer nun auch weitere Prozesse als nur der lichtintensive Prozess, insbesondere Prozesse, die auf den lichtintensiven Prozess folgen oder diesem voraus gehen, durchgeführt und überwacht/beobachtet werden.

Die Prozesskammer ist insbesondere komplett von Kammerwänden eingehaust. Die Prozesskammer kann Schleusen aufweisen, um Arbeitsmaterialien, Werkstücke und/oder Grünlinge in die Prozesskammer ein- oder auszuschleusen. Alternativ kann die Prozesskammer eine oder mehrere Bestückungstüren aufweisen, die zu einer, insbesondere manuellen, Bestückung der Prozesskammer mit Arbeitsmaterial und/oder Grünlingen und/oder zu einer Entnahme fertiger Werkstücke geöffnet werden können, wobei insbesondere Sicherheitsvorrichtungen vorgesehen sind, die den lichtintensiven Prozess vermeiden, wenn die Bestückungstür geöffnet ist. Die Prozesskammer kann bis auf das zumindest eine Sichtfenster als lichtdicht ausgebildet sein. Die Kammerwand umschließt, insbesondere gemeinsam mit weiteren Kammerwänden, Schleusen und/oder Türen der Prozesskammer, einen Prozessraum der Prozesskammer.

Unter "lichtintensiven Prozessen" sollen insbesondere Prozesse verstanden werden, bei denen Lichtströme von zumindest 10.000 Im, beispielsweise zumindest 100.000 Im, insbesondere zumindest 100.000 Im, und/oder Beleuchtungsstärken, insbesondere am Sichtfenster oder in Teilbereichen des Sichtfensters, von zumindest 10.000 lx, beispielsweise zumindest 100.000 lx, insbesondere zumindest 1.000.000 lx, erreicht werden. Der lichtintensive Prozess ist beispielsweise ein Schweißprozess, insbesondere ein Laser-Schweißprozess oder ein Laser-Hybrid-Schweißprozess, oder ein Plasma-Schneidprozess oder ein anderer Plasmaprozess. Alternativ kann der lichtintensive Prozess ein Leuchtstärketest oder ein anderer Prozess bei einer Leuchtmittelfertigung sein.

Die Abblendstärke gibt insbesondere an, wieviel des eintreffenden sichtbaren Lichts abgeblendet wird. Vorzugsweise ist die Abblendstärke wellenlängenneutral, unterscheidet sich insbesondere um maximal 50 %, insbesondere um maximal 20 %, vorzugsweise um maximal 10 % zwischen beliebigen Wellenlängen, insbesondere des sichtbaren Lichts. Die Abblendstärke entspricht insbesondere einer Schutzstufe des Sichtfensters.

Das Sichtfenster ist insbesondere dazu vorgesehen, einem Beobachter einen Einblick in die Prozesskammer, insbesondere zumindest während einer Durchführung des lichtintensiven Prozesses, beispielsweise zur Qualitätssicherung, zu gewähren. Das Sichtfenster ist beispielsweise dazu vorgesehen, zumindest während einer Durchführung des lichtintensiven Prozesses, die Abblendstärke zu erhöhen und in einen abgedunkelten Zustand überzugehen. In dem abgedunkelten Zustand weist das Sichtfenster insbesondere eine Schutzstufe von zumindest 5, vorzugsweise zumindest 7, auf. Unter einer "Schutzstufe" soll insbesondere eine Augenschutzstufe im Einklang mit den Normen DIN EN 166:2002-04 und/oder DIN EN 169:2003-02 verstanden werden. Insbesondere ist eine Transmission die Schutzscheibe von der aktuellen Schutzstufe der Schutzscheibe abhängig. Insbesondere ist eine Transmission durch die Schutzscheibe umso größer umso kleiner die Schutzstufe ist. Das Sichtfenster weist in dem abgedunkelten Zustand insbesondere in zumindest einem Spektralbereich eine Transmissivität von maximal 40 %, vorzugsweise maximal 30%, bevorzugt maximal 20 % und besonders bevorzugt maximal 10 % auf. Unter einem "Spektralbereich" soll insbesondere zumindest ein Teilbereich des elektromagnetischen Spektrums verstanden werden, beispielsweise ein Infrarotbereich, ein Bereich sichtbaren Lichts, ein UV-Bereich und/oder eine zumindest teilweise Kombination des Infrarotbereichs, des Bereichs sichtbaren Lichts und/oder des UV-Bereichs. Vorzugsweise ist der Spektralbereich, welcher insbesondere die größte Transmissivität durch den optischen Blendschutzfilter aufweist, als zumindest ein, insbesondere in Richtung des Infrarotbereichs und/oder des UV-Bereichs abgegrenzter, Bereich des sichtbaren Lichts ausgebildet. Vorteilhaft umfasst der Spektralbereich zumindest Licht in einem Wellenlängenbereich welcher oberhalb 380 nm, vorzugsweise oberhalb 420 nm und bevorzugt oberhalb 470 nm, sowie unterhalb 550 nm, bevorzugt unterhalb 590 nm und besonders bevorzugt unterhalb 780 nm liegt. Insbesondere ist der Wert der Transmissivität als ein durchschnittlicher Transmissionswert von Licht des Spektralbereichs durch den optischen Blendschutzfilter bei einer Mitteilung über alle Wellenlängen des Spektralbereichs und/oder als ein minimaler Transmissionswert von Licht mit einer innerhalb des Spektralbereichs liegenden Wellenlänge ausgebildet. Zusätzlich kann insbesondere bei einer Berechnung des durchschnittlichen Transmissionswerts ein, insbesondere wellenlängenabhängiger, Gewichtungsfaktor, wie beispielsweise in den Normen ISO 16321-1 und/oder ISO 16321-2 beschrieben, Anwendung finden.

Darunter, dass Licht "abgeblendet" wird, soll insbesondere verstanden werden, dass das Licht blockiert, insbesondere absorbiert und/oder reflektiert wird. Insbesondere wird abgeblendetes Licht an einem vollständigen Durchdringen des Sichtfensters gehindert.

Die Abblendeinheit ist insbesondere dazu vorgesehen, eine Abblendstärke des Sichtfensters zwischen zumindest zwei Werten umzuschalten. Insbesondere ist zumindest einer der Werte der Abblendstärke kleiner als 90 %, insbesondere kleiner als 80 %, vorteilhaft kleiner als 60 %. Insbesondere ist zumindest ein Wert der Abblendstärke größer als 99 %.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Gemäß einer bevorzugten Ausgestaltung weist die Abblendeinheit zumindest eine Flüssigkristalleinheit auf, die dazu vorgesehen ist, eine Kristallausrichtung in Abhängigkeit von dem Steuersignal zu verändern, um die Abblendstärke zu verändern. Hierdurch kann insbesondere eine flexible Vorrichtung bereitgestellt werden. Die Flüssigkristalleinheit weist insbesondere zumindest eine Flüssigkristallschicht auf, die vorzugsweise zwischen zwei oder mehr Elektroden angeordnet ist, die insbesondere dazu vorgesehen sind, ein elektrisches Feld zu erzeugen, das auf die Flüssigkristallschicht wirkt. Insbesondere weist das Sichtfenster, insbesondere die Abblendeinheit, zumindest eine Steuereinheit auf, die dazu vorgesehen ist, in Abhängigkeit von dem Steuersignal eine Stärke eines auf die Flüssigkristallschicht wirkenden elektrischen Feldes einzustellen. Beispielsweise weist die Flüssigkristalleinheit zumindest eine Polarisatorschicht auf. Insbesondere ist die Flüssigkristallschicht dazu vorgesehen, in Abhängigkeit von der Kristallausrichtung eine Polarisationsrichtung von die Flüssigkristallschicht durchdringendem Licht unterschiedlich stark zu drehen. Alternativ kann die Flüssigkristallschicht dazu vorgesehen sein, in die Flüssigkristallschicht dringendes Licht in Abhängigkeit von der Kristallausrichtung unterschiedlich stark zu absorbieren.

Gemäß einer alternativen Ausgestaltung kann die Abblendeinheit als eine Lamellenklappe ausgebildet sein, wobei die Lamellenklappe Lamellen von stark getöntem Material aufweist. Insbesondere kann die Abblendeinheit dazu vorgesehen sein, einen Klappzustand der Lamellen in Abhängigkeit von dem Steuersignal einzustellen, so dass die Lamellen bspw. in einem Zustand parallel oder im Wesentlichen parallel zu einer Einblickrichtung ausgerichtet sind und dass die Lamellen in einem weiteren Zustand, insbesondere während Durchführung des lichtintensiven Prozesses, orthogonal oder im Wesentlichen orthogonal zu der Einblickrichtung ausgerichtet sind und vorzugsweise einander überlappen.

Gemäß einer weiteren Ausgestaltung wird vorgeschlagen, dass die Abblendeinheit dazu vorgesehen ist, bei Ausbleiben eines Steuersignals das Sichtfenster abzudunkeln. Insbesondere ist das Sichtfenster dazu vorgesehen, das Sichtfenster in einem stromlosen Zustand abzudunkeln. Hierdurch kann insbesondere eine hohe Sicherheit erreicht werden.

Ferner kann die Prozesskammer einen Automaten, insbesondere einen Roboter, zur Durchführung des lichtintensiven Prozesses umfassen, der dazu vorgesehen ist, das Steuersignal bereitzustellen, um das Sichtfenster während der Durchführung des lichtintensiven Prozesses abzudunkeln. Hierdurch kann insbesondere eine hohe Sicherheit und/oder eine schnelle Reaktion des Sichtfensters erreicht werden. Insbesondere ist eine Steuereinheit des Automaten signaltechnisch, insbesondere drahtgebunden, alternativ drahtlos, mit einer Steuereinheit des Sichtfensters verbunden. Insbesondere ist der Automat dazu vorgesehen, das Steuersignal derart zur Verfügung zu stellen, dass das Sichtfenster auch eine vorgegebene Zeit nach Durchführung des lichtintensiven Prozesses abgedunkelt bleibt, insbesondere um ein eventuelles Nachglühen abzudunkeln. Insbesondere ist der Automat dazu vorgesehen, insbesondere wenn der lichtintensive Prozess gerade nicht stattfindet, ein aktives Steuersignal bereitzustellen, das das Sichtfenster dazu veranlasst, eine Verdunklung aufzuheben. Der Automat kann dazu vorgesehen sein, während Durchführung des lichtintensiven Prozesses ein aktives Signal zur Verdunklung des Sichtfensters zu übertragen. Alternativ kann der Automat dazu vorgesehen sein, während Durchführung des lichtintensiven Prozesses dies passiv zu übermitteln, indem ein Signal zur Aufhebung einer Verdunklung des Sichtfensters unterbrochen wird. Insbesondere ist eine digitale Signalübertragung oder eine analoge Signalübertragung denkbar. Beispielsweise ist der Automat als Schweißautomat, insbesondere als Schweißroboter ausgebildet.

Weiterhin wird vorgeschlagen, dass das Sichtfenster zumindest eine Filtereinheit, insbesondere mit zumindest einem Farbfilter, aufweist, die dazu vorgesehen ist, zumindest eine spezifische Lichtwellenlänge, insbesondere des sichtbaren Lichts, zu filtern. Hierdurch kann insbesondere eine erhöhte Sicherheit erreicht werden. Insbesondere kann die Filtereinheit dazu vorgesehen sein, eine Wellenlänge eines in dem lichtintensiven Prozess, insbesondere von dem Automaten, verwendeten Lasers zu filtern. Insbesondere ist die Filtereinheit dazu vorgesehen, unabhängig von einem Zustand der Abblendeinheit das Licht zu filtern.

Ferner kann das Sichtfenster zumindest eine Filtereinheit aufweisen, die dazu vorgesehen ist, zumindest infrarotes Licht, insbesondere lediglich infrarotes Licht zu filtern. Hierdurch kann insbesondere eine hohe Sicherheit erreicht werden.

Gemäß einer weiteren Ausgestaltung wird vorgeschlagen, dass das Sichtfenster zumindest eine Schutzplatte aufweist, die an einer Innenseite vor der Abblendeinheit angeordnet ist und insbesondere zumindest einen Teil der Filtereinheit aufweist. Hierdurch kann insbesondere eine Beschädigung des Sichtfensters und/oder der Abblendeinheit durch den lichtintensiven Prozess, insbesondere durch dabei entstehende Funken oder Spritzer, vermieden werden. Die Schutzplatte weist vorzugsweise ein plattenartiges Material mit einer Dicke von zumindest 0,5 mm, insbesondere zumindest 1 mm, vorteilhaft zumindest 3 mm, beispielsweise zumindest 5 mm, auf. Insbesondere ist das plattenartige Material von einem Kunststoff, insbesondere Acryl oder Polycarbonat, gebildet. Beispielsweise ist die Filtereinheit, oder zumindest Teile der Filtereinheit, als Beschichtung auf der Schutzplatte ausgebildet. Die Beschichtung kann insbesondere eine Gasphasenbeschichtung oder eine Folienbeschichtung sein.

Vorzugsweise ist die Schutzplatte zerstörungsfrei, insbesondere werkzeuglos, austauschbar. Hierdurch können insbesondere eine hohe Nutzungsdauer und eine hohe Langlebigkeit des Sichtfensters und/oder ein guter Durchblick erreicht werden. Insbesondere ist die Schutzplatte kraft- und/oder formschlüssig mit dem Rest des Sichtfensters verbunden.

Alternativ kann die Schutzplatte mittels einer Haftverbindung, insbesondere stoffschlüssig mit dem Rest des Sichtfensters, insbesondere der Abblendeinheit verbunden sein. Die Haftverbindung kann insbesondere werkzeuglos lösbar sein.

Ferner wird vorgeschlagen, dass das Sichtfenster zumindest ein Anti-Reflex-Element aufweist, das dazu vorgesehen ist, Reflektionen an einer Außenseite des Sichtfensters zu dämpfen oder zu vermeiden. Hierdurch kann insbesondere ein verbesserter Einblick in die Prozesskammer erreicht werden.

Vorzugsweise weist das Sichtfenster ein Sichtfeld größer als 100 cm², insbesondere größer als 300 cm², vorteilhaft größer als 500 cm², auf. Unter einem Sichtfeld soll insbesondere eine, vorzugsweise ebene, Fläche verstanden werden, in dem das Sichtfenster einen Einblick in die Prozesskammer gewährt. Hierdurch kann insbesondere ein guter Einblick ermöglicht werden. Vorteilhaft erstrecken sich die Abblendeinheit und/oder die Filtereinheit über eine Gesamtheit des Sichtfelds.

Gemäß einer weiteren Ausgestaltung weist die Abblendeinheit eine Bedieneinheit auf, mittels der ein Bediener eine maximale und/oder minimale Abblendstärke einstellen kann. Hierdurch kann insbesondere eine hohe Flexibilität hinsichtlich unterschiedlicher lichtintensiver Prozesse, insbesondere hinsichtlich ihrer jeweiligen Lichtintensität, erreicht werden.

Weiterhin wird ein Sichtfenster für zuvor beschriebene Prozesskammern vorgeschlagen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Prozesskammer in einer schematischen Ansicht,
- Fig. 2: ein erfindungsgemäßes Sichtfenster in einer schematischen Aufsicht und
- Fig. 3: das Sichtfenster aus Fig. 2 in einer schematischen Schnittdarstellung entlang Schnittlinie A.

### Beschreibung des Ausführungsbeispiels

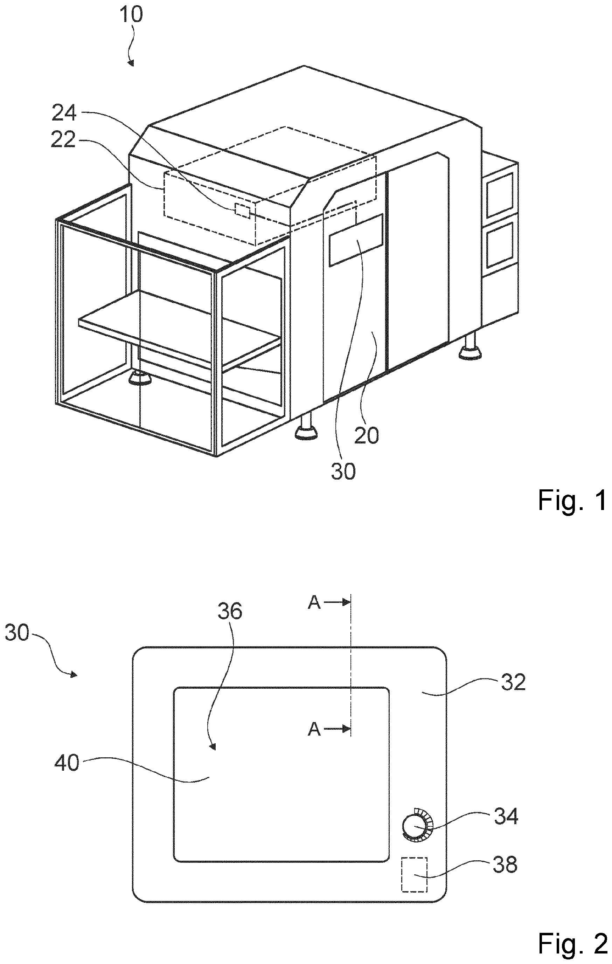

Figur 1 zeigt eine Prozesskammer 10 für automatisierte lichtintensive Prozesse. Die Prozesskammer 10 weist eine Kammerwand 20 auf. Die Kammerwand 20 weist ein Sichtfenster 30 auf. Das Sichtfenster 30 ist dazu vorgesehen, zumindest einen Teil des sichtbaren Lichts in zumindest einem Betriebszustand entsprechend einer vorgegebenen Abblendstärke abzublenden. Die Kammerwand 20 kann eine Tür der Prozesskammer 10 bilden.

Die Prozesskammer 10 weist weiterhin einen Automaten 22 zur Durchführung des lichtintensiven Prozesses auf. Der Automat 22 ist ein Schweißroboter. Der Automat 22 weist eine Steuereinheit 24 auf, die dazu vorgesehen ist, Steuersignale bereitzustellen und an das Sichtfenster 30 zu übertragen.

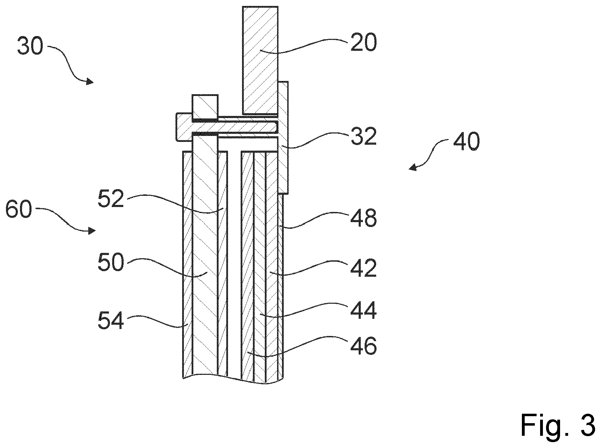

Figuren 2 und 3 zeigen das Sichtfenster 30 im Detail. Das Sichtfenster 30 weist einen Rahmen 32 auf. Der Rahmen 32 ist zumindest für sichtbares Licht intransparent. Der Rahmen 32 ist von einem Metallblech gebildet. Der Rahmen 32 umrahmt ein Sichtfeld 36. Das Sichtfeld 36 weist eine Größe von 28 cm mal 24 cm auf. Das Sichtfeld 36 weist eine Größe von 672 cm² auf. Das Sichtfeld 36 weist eine rechteckige oder rechteckartige Form auf. Alternativ sind auch runde, ovale oder beliebig anders geformte Sichtfelder denkbar. Das Sichtfenster 30, insbesondere der Rahmen 32, sind mit der Kammerwand 20 verschraubt, alternativ verklebt.

Das Sichtfenster 30 weist eine Abblendeinheit 40 auf, die dazu vorgesehen ist, die Abblendstärke des Sichtfensters 30 in Abhängigkeit von den Steuersignalen zu verändern. Das Sichtfenster 30 ist dazu vorgesehen, zumindest während der Durchführung des lichtintensiven Prozesses abzudunkeln, also insbesondere die Abblendstärke zu vergrößern. Die Abblendeinheit 40 erstreckt sich über das gesamte Sichtfeld 36.

Die Abblendeinheit 40 weist eine Flüssigkristalleinheit 42 auf, die dazu vorgesehen ist, eine Kristallausrichtung in Abhängigkeit von dem Steuersignal zu verändern, um die Abblendstärke zu verändern. Die Abblendeinheit 40 weist eine Steuereinheit 38 auf, die dazu vorgesehen ist, die Steuersignale des Automaten 22 zu empfangen und die Abblendstärke des Sichtfensters 30 einzustellen. Die Flüssigkristalleinheit 42 weist zwei Polarisatoren auf, die senkrecht zueinander ausgerichtete Polarisationsrichtungen aufweisen. Zwischen den Polarisatoren ist eine Flüssigkristallschicht angeordnet. Die Flüssigkristalleinheit 42 weist Elektroden auf, die dazu vorgesehen sind ein elektrisches Feld zu generieren, das die Kristallausrichtung der Kristalle in der Flüssigkristallschicht beeinflusst.

Die Abblendeinheit 40 ist dazu vorgesehen, bei Ausbleiben der Steuersignale das Sichtfenster 30 abzudunkeln. Beispielsweise ist die Steuereinheit 24 des Automaten 22 dazu vorgesehen ein aktives Steuersignal zu senden, bei dessen Empfang das Sichtfenster 30 und/oder die Steuereinheit 38 dazu vorgesehen sind, das Sichtfenster 30 von einem abgedunkelten Zustand mit insbesondere hoher Abblendstärke in einen Durchblickszustand mit insbesondere niedriger Abblendstärke umzuschalten.

Das Sichtfenster 30 weist eine Schutzplatte 50 auf, die an einer Innenseite vor der Abblendeinheit 40 angeordnet ist. Die Schutzplatte 50 ist zerstörungsfrei, insbesondere werkzeuglos, austauschbar. Die Schutzplatte 50 ist formschlüssig - hier beispielhaft mit einer Schraubverbindung angedeutet - mit dem Rest des Sichtfensters 30 verbunden. Alternativ sind unter anderem Rast- und/oder Schnappverbindungen denkbar.

Das Sichtfenster 30 weist eine Filtereinheit 60 auf. Die Filtereinheit 60 erstreckt sich über das gesamte Sichtfeld 36. Die Filtereinheit 60 weist einen UV-Filter 44 auf. Der UV-Filter 44 ist dazu vorgesehen, ultraviolettes Licht, insbesondere im Wellenlängenbereich zwischen, zu mindestens 99,9999 % zu blockieren. Der UV-Filter 44 ist auf einer Innenseite, also einer einem Kammerinneren zugewandten Seite, der Flüssigkristalleinheit 42 angeordnet und insbesondere stoffschlüssig mit dieser verbunden.

Die Filtereinheit 60 weist weiterhin einen IR-Filter 46 auf. Der IR-Filter 46 ist dazu vorgesehen, infrarotes Licht, insbesondere im Wellenlängenbereich zwischen... zu mindestens 99,9999 % zu blockieren. Der IR-Filter 44 ist auf der Innenseite der Flüssigkristalleinheit 42 angeordnet und insbesondere stoffschlüssig mit dieser verbunden.

Der IR-Filter 46 und/oder der UV-Filter 44 können als Beschichtungen auf der Flüssigkristalleinheit 42 ausgebildet sein.

Die Filtereinheit 60 kann weiterhin einen Farbfilter 52 aufweisen, der dazu vorgesehen ist eine spezifische Wellenlänge zu filtern. Der Farbfilter 52 ist auf der Schutzplatte 50, insbesondere auf einer der Flüssigkristalleinheit 42 zugewandten Seite, angeordnet.

Gemäß alternativen Ausgestaltungen kann der Farbfilter auch auf der Flüssigkristalleinheit angeordnet sein und/oder der IR-Filter und/oder der UV-Filter können auf der Schutzplatte angeordnet sein.

Das Sichtfenster 30 weist weiterhin ein Anti-Reflex-Element 48, hier beispielhaft als Folie ausgebildet, auf, das dazu vorgesehen ist, Reflektionen an einer Außenseite des Sichtfensters 30 zu dämpfen oder zu vermeiden.

Das Sichtfenster 30 weist ein weiteres Anti-Reflex-Element 54, hier beispielhaft als Folie ausgebildet, auf, das dazu vorgesehen ist, Reflektionen an einer Innenseite des Sichtfensters 30 zu dämpfen oder zu vermeiden.

Die Abblendeinheit 40 weist eine Bedieneinheit 34 auf, mittels der ein Bediener eine maximale und/oder minimale Abblendstärke einstellen kann. Beispielhaft ist die Bedieneinheit hier als Potentiometer ausgebildet. Die Steuereinheit 38 der Abblendeinheit 40 ist dazu vorgesehen, eine Abblendstärke während des lichtintensiven Prozesses in Abhängigkeit von einem mittels der Bedieneinheit 34 festgelegten Wert festzulegen. Die Steuereinheit 38 der Abblendeinheit 40 kann weiterhin dazu vorgesehen sein, eine Abblendstärke bei Abwesenheit des lichtintensiven Prozesses in Abhängigkeit von einem mittels der Bedieneinheit 34 festgelegten Wert festzulegen.

Gemäß weiteren Ausgestaltungen ist es denkbar, dass das Sichtfenster zumindest eine Sensoreinheit aufweist, die dazu vorgesehen ist, einen lichtaktiven Prozess zu erkennen und Steuersignale zur Steuerung der Abblendeinheit zu generieren. Diese Steuersignale können anstelle von Steuersignalen des Automaten oder zusätzlich zu diesen, Anwendung finden. Insbesondere weist die Sensoreinheit zumindest einen Lichtsensor auf. Beispielsweise weist die Sensoreinheit einen Stromsensor auf, der dazu vorgesehen ist, eine Leistungsaufnahme des Automaten zu überwachen.

Gemäß weiteren Ausgestaltungen kann die Schutzplatte eine Tönung oder Färbung aufweisen, um zumindest einen Teil, insbesondere zumindest 50 %, beispielsweise zumindest 70 %, des sichtbaren Lichts, unabhängig von einem Schaltzustand der Abblendeinheit zu blockieren.

Weiterhin kann das Sichtfenster eine weitere, insbesondere wechselbare, Schutzplatte aufweisen, die an einer Außenseite des Sichtfensters angeordnet/montiert ist.

### Bezugszeichen

- 10: Prozesskammer
- 20: Kammerwand
- 22: Automat
- 24: Steuereinheit
- 30: Sichtfenster
- 32: Rahmen
- 34: Bedieneinheit
- 36: Sichtfeld
- 38: Steuereinheit
- 40: Abblendeinheit
- 42: Flüssigkristalleinheit
- 44: UV-Filter
- 46: IR-Filter
- 48: Antireflex-Element
- 50: Schutzplatte
- 52: Farbfilter
- 54: Antireflex-Element
- 60: Filtereinheit

## Patentansprüche

1. Prozesskammer für automatisierte lichtintensive Prozesse, insbesondere für einen automatisierten Schweißprozess, mit zumindest einer Kammerwand (20), die ein Sichtfenster (30) aufweist, das dazu vorgesehen ist, zumindest einen Teil des sichtbaren Lichts in zumindest einem Betriebszustand entsprechend einer vorgegebenen Abblendstärke abzublenden,
**dadurch gekennzeichnet, dass**
das Sichtfenster (30) eine Abblendeinheit (40) aufweist, die dazu vorgesehen ist, die Abblendstärke des Sichtfensters (30) in Abhängigkeit von zumindest einem Steuersignal zu verändern.

2. Prozesskammer nach Anspruch 1, **dadurch gekennzeichnet, dass** die Abblendeinheit (40) zumindest eine Flüssigkristalleinheit (42) aufweist, die dazu vorgesehen ist, eine Kristallausrichtung in Abhängigkeit von dem Steuersignal zu verändern, um die Abblendstärke zu verändern.

3. Prozesskammer nach einem der vorhergehenden Ansprüche, **dadurch gekennzeichnet, dass** die Abblendeinheit (40) dazu vorgesehen ist, bei Ausbleiben eines Steuersignals das Sichtfenster (30) abzudunkeln.

4. Prozesskammer nach einem der vorhergehenden Ansprüche, **gekennzeichnet durch** einen Automaten (22), insbesondere einen Roboter, zur Durchführung des lichtintensiven Prozesses, der dazu vorgesehen ist, das Steuersignal bereitzustellen, um das Sichtfenster (30) während der Durchführung des lichtintensiven Prozesses abzudunkeln.

5. Prozesskammer nach einem der vorhergehenden Ansprüche, **dadurch gekennzeichnet, dass** das Sichtfenster (30) zumindest eine Filtereinheit (60) aufweist, die dazu vorgesehen ist, zumindest eine Lichtwellenlänge des sichtbaren Lichts zu filtern.

6. Prozesskammer nach einem der vorhergehenden Ansprüche, **dadurch gekennzeichnet, dass** das Sichtfenster (30) zumindest eine Filtereinheit (60) aufweist, die dazu vorgesehen ist, zumindest infrarotes Licht zu filtern.

7. Prozesskammer nach einem der vorhergehenden Ansprüche, **dadurch gekennzeichnet, dass** das Sichtfenster (30) zumindest eine Schutzplatte (50) aufweist, die an einer Innenseite vor der Abblendeinheit (40) angeordnet ist und insbesondere zumindest einen Teil der Filtereinheit (60) aufweist.

8. Prozesskammer nach Anspruch 7, **dadurch gekennzeichnet, dass** die Schutzplatte (50) zerstörungsfrei, insbesondere werkzeuglos, austauschbar ist.

9. Prozesskammer nach einem der vorhergehenden Ansprüche, **dadurch gekennzeichnet, dass** das Sichtfenster (30) zumindest ein Anti-Reflex-Element (48) aufweist, das dazu vorgesehen ist, Reflektionen an einer Außenseite des Sichtfensters (30) zu dämpfen oder zu vermeiden.

10. Prozesskammer nach einem der vorhergehenden Ansprüche, **dadurch gekennzeichnet, dass** das Sichtfenster (30) ein Sichtfeld (36) größer als 100 cm² aufweist.

11. Prozesskammer nach einem der vorhergehenden Ansprüche, **dadurch gekennzeichnet, dass** die Abblendeinheit (40) eine Bedieneinheit (34) aufweist, mittels der ein Bediener eine maximale und/oder minimale Abblendstärke einstellen kann.

12. Sichtfenster für eine Prozesskammer (10) nach einem der vorhergehenden Ansprüche.
